# EUROPEAN PATENT APPLICATION

(11) **EP 4 439 878 A1**
(43) Date of publication of application: **02.10.2024**
(21) Application number: 23164616.7
(22) Date of filing: 28.03.2023
(51) Int. Cl.: H01S 3/13, H01S 3/23, H01S 3/00, H01S 3/10

(54) **HIGH ENERGY LASER PROCESSING SYSTEM**

(71) Applicant: NKT Photonics A/S, 3460 Birkerød (DK)
(72) Inventor: DEVINE, Adam Lee, Southampton, SO31 4RA (GB)
(74) Representative: Zacco Denmark A/S

(57) **Abstract**

A high energy laser processing system (100) comprising:
an optical source (102) to provide a cw initial laser signal having a spectral linewidth of 15 to 250 GHz;
an optical modulator (104) configurable in a cw operating mode to transmit the cw initial laser signal without applying amplitude modulation and in a pulsed operating mode to apply amplitude modulation to output a pulsed initial laser signal;
an optical splitter (106);
optical amplifiers (108) to amplify the seed laser signals to average optical powers of 800 W to 5 kW;
phase actuators (110) configurable to adjust phases of seed laser signals;
an optical beam combiner (112);
phase control apparatus (116) operative to transmit phase control signals configured to cause phase actuators to adjust phases of seed laser signals to minimize phase differences between seed laser signals within a combined laser signal output from the beam combiner; and
a controller (118) to transmit at least one control signal configured to cause the optical modulator to switch between the operating modes.

## Description

### Technical Field

The invention relates to a high energy laser processing system.

### Background

Lasers are used in many industries for laser processing of materials, including, for example, welding, cutting, marking, drilling, ablation, surface processing and additive manufacturing. Both continuous wave, cw, and pulsed lasers are used for laser processing of materials, for example, WO 2007/132182 A2 describes a pulsed laser for materials processing, and some lasers for materials processing are able to switch between cw and pulsed operation, for example the TRUMPF^{®} TruPulse nano fibre laser is able to switch between nanosecond pulsed and cw operation.

The pulse length used varies depending on the particular laser processing being performed and can range from picoseconds up to milliseconds, with hundreds of femtosecond, picosecond and nanosecond pulses being widely used. For both cw and pulsed operation, the average optical power that is required also varies depending on the particular laser processing being performed, cw lasers for materials processing typically generate cw average optical powers of up to 5 kW. Pulsed lasers for laser processing typically operate at average optical powers of 10's to hundreds of Watts, and lasers able to switch between cw and pulsed operation, such as the TRUMPF^{®} TruPulse nano, are limited to several hundred W maximum cw output power. A number of physical effects make further power scaling difficult including but not limited to stimulated Brillouin scattering (SBS), stimulated Raman scattering (SRS) and Kerr self-focussing.

To achieve higher cw laser optical powers for materials processing, spatial beam combining techniques are used to combine a number of laser beams to form higher energy cw laser beams. The resulting combined laser beam has a poor beam quality factor, M², but depending on the application, this is not generally considered to be an issue since the work piece undergoing the laser processing is typically less than 1.5 m from the laser output. Power scaling of fibre lasers can also be performed using coherent beam combining or spectral beam combining. Various methods of beam combining for fibre lasers are reported in the review paper Fathi, H., Närhi, M. and Gumenyuk, R., "Towards Ultimate High-Power Scaling: Coherent Beam Combining of Fiber Lasers", Photonics, 2021, 8, 566.

### Summary

It is an object to provide an improved high energy laser processing system.

An aspect provides a high energy laser processing system comprising an optical source, an optical modulator, an optical splitter, a plurality of optical amplifiers, a plurality of phase actuators, an optical beam combiner, phase control apparatus and a controller. The optical source is configured to provide a continuous wave, cw, initial laser signal having a spectral linewidth in the range 15 to 250 GHz. The optical modulator is configurable to transmit laser signals without applying amplitude modulation orto apply amplitude modulation to laser signals. The optical modulator has a cw operating mode and a pulsed operating mode. In the cw operating mode the optical modulator is configured to transmit the cw initial laser signal and in the pulsed operating mode the optical modulator is configured to apply amplitude modulation to output a pulsed initial laser signal of initial laser pulses. The optical splitter is configured to power split the initial laser signal into a plurality of seed laser signals. The optical amplifiers are configured to amplify the seed laser signals to average optical powers in the range 800 W to 5 kW. The phase actuators are configurable to adjust phases of seed laser signals. The phase actuators are provided between the optical splitter and respective optical amplifiers. The optical beam combiner is configured to receive seed laser signals from the optical amplifiers. The optical beam combiner is additionally configured to combine cw seed laser signals into a cw combined laser signal and to combine pulsed seed laser signals into a pulsed combined laser signal. The phase control apparatus is configured to determine phase differences between seed laser signals within a said combined laser signal. The phase control apparatus is operative to transmit phase control signals to phase actuators. The phase control signals are configured to cause phase actuators to adjust phases of seed laser signals to minimize phase differences between seed laser signals within a said combined laser signal. The controller is operative to transmit at least one control signal configured to cause the optical modulator to switch between operating in the pulsed operating mode and operating in the cw operating mode.

The system enables switching between pulsed and cw operation, with coherent beam combining based power scaling of both cw and pulsed laser signals. Configuring the optical sources to provide seed laser signals having spectral linewidths in the range 15 to 250 GHz advantageously mitigates non-linear effects, including stimulated Brillouin scattering, SBS. The optical amplifiers enable a lower power optical source to be used and for an optical modulator specified for lower power optical signals to be used.

In an embodiment, the cw combined laser signal has an average optical power of at least 10 kW, such as up to 100 kW. The system enables power scaling to average optical powers which cannot be achieved using a single source and optical amplifier, while maintaining good beam quality.

In an embodiment, the optical modulator and the optical amplifiers are configured to provide seed laser pulses having a peak pulse energy in the range 0.5 mJ and 10 mJ.

In an embodiment, the pulsed combined laser signal has a peak pulse energy of at least 20 mJ, such as up to 100 mJ. The system enables power scaling to peak pulse energies which cannot be achieved using a single source and optical amplifier.

In an embodiment, the optical source comprises a single frequency laser and a phase modulator. The single frequency laser is configured to generate a single frequency cw laser signal having a spectral linewidth of up to 20kHz. The phase modulator is operative to apply phase modulation to increase the spectral linewidth to up to 120 GHz. Broadening the linewidth of a single frequency cw laser signal using a phase modulator advantageously enables an initial laser signal to be provided that has an accurately controllable linewidth whilst maintaining the benefits of the low relative intensity noise (RIN) of single frequency lasers to mitigate nonlinear effect, including SBS.

In an embodiment, the phase modulator is operative to apply phase modulation to the single frequency cw laser signal to increase the spectral linewidth to up to 120 GHz to form a cw initial laser signal. The optical modulator is provided after the phase modulator. The optical modulator is configured, in the cw operating mode, to transmit the cw initial laser signal without applying amplitude modulation. The optical modulator is configured, in the pulsed operating mode, to apply amplitude modulation to the cw initial laser signal received from the phase modulator to form a pulsed initial laser signal.

In an embodiment, the optical modulator is provided between the single frequency laser and the phase modulator. The optical modulator is configured, in the cw operating mode, to transmit the single frequency cw laser signal without applying amplitude modulation. The optical modulator is configured, in the pulsed operating mode, to apply amplitude modulation to the single frequency cw laser signal to form a single frequency pulsed laser signal. The phase modulator is operative to apply phase modulation to increase the spectral linewidth of the single frequency cw laser signal to up to 120 GHz to form a cw initial laser signal. The phase modulator is further operative to apply phase modulation to increase the spectral linewidth of the single frequency pulsed laser signal to up to 120 GHz to form a pulsed initial laser signal.

In an embodiment, the single frequency cw laser signal has a spectral linewidth of up to 10 kHz. In an embodiment, the single frequency cw laser signal has a spectral linewidth of up to 1 kHz. In an embodiment, the single frequency cw laser signal has a spectral linewidth of up to 500 Hz. Broadening a very narrow linewidth single frequency cw laser signal using a phase modulator advantageously enables a cw laser signal to be provided that has an accurately controllable linewidth to mitigate SBS, with minimal impact on the laser intensity noise.

In an embodiment, the optical source comprises a grating-based fiber laser oscillator configured to generate a cw seed laser signal having a spectral linewidth of up to 120 GHz. Use of a grating-based fibre laser oscillator enables a cw laser signal having a desired spectral linewidth to mitigate SBS to be directly generated.

In an embodiment, the optical source comprises a laser diode configured to generate a cw initial laser signal having a spectral linewidth in the range 15 to 250 GHz. Use of a laser diode enables a cw initial laser signal having a desired spectral linewidth to mitigate SBS to be directly generated.

In an embodiment, the laser diode is one of a fibre Bragg grating locked laser diode or a Fabry-Perot laser diode.

In an embodiment, the initial laser pulses are nanosecond pulses. This may contribute to keeping the peak power low enough to mitigate nonlinear effects, including stimulated Rayleigh scattering, SRS, within the at least one optical amplifier.

In an embodiment, the initial laser pulses have a pulse duration in the range 1 ns to 2000 ns. This may contribute to keeping peak pulse power low enough to mitigate non-linear effects, such as stimulated Rayleigh scattering, enabling mJ pulse energies to be achieved.

In an embodiment, the initial laser pulses have a pulse repetition rate in the range 1 MHz to 100 MHz. This may contribute to keeping the peak power low enough to mitigate nonlinear effects, including stimulated Rayleigh scattering, SRS, within the at least one optical amplifier.

In an embodiment, the optical modulator is a semiconductor optical amplifier.

In an embodiment, the semiconductor optical amplifier is additionally configured, in the cw operating mode, to amplify the cw initial laser signal. Use of a semiconductor optical amplifier, SOA, enables the optical modulator to both amplitude modulate the cw initial laser signal to form a pulsed initial laser signal and to amplify the cw initial laser signal.

In an embodiment, the semiconductor optical amplifier is additionally configured, in the cw operating mode, to amplify the cw initial laser signal to an optical power of up to 1 W. Use of a semiconductor optical amplifier, SOA, enables the optical modulator to both amplitude modulate the cw initial laser signal to form a pulsed initial laser signal and to amplify the cw initial laser signal.

In an embodiment, the semiconductor optical amplifier is configured, in the cw operating mode, to amplify the cw initial laser signal to an optical power of up to 500 mW. In an embodiment, the semiconductor optical amplifier is configured, in the cw operating mode, to amplify the cw initial laser signal to an optical power of up to 300 mW. In an embodiment, the semiconductor optical amplifier is configured, in the cw operating mode, to amplify the cw initial laser signal to an optical power of up to 200 m. In an embodiment, the semiconductor optical amplifier is configured, in the cw operating mode, to amplify the cw initial laser signal to an optical power of up to 100 mW.

In an embodiment, the semiconductor optical amplifier is additionally configured, in the pulsed operating mode, to amplify the initial laser pulses to an average optical power in the range 1 mW to 250 mW. Use of a semiconductor optical amplifier, SOA, enables the optical modulator to amplify at the same time as amplitude modulating the cw laser signal to form a pulsed initial laser signal.

In an embodiment, the optical modulator is one of an acousto-optic modulator, AOM, an electroabsorption modulator, EAM, a booster optical amplifier, BOA, or an optical switch, such as a micro-electromechanical switch.

In an embodiment, the optical beam combiner is a geometric beam combiner.

In an embodiment, the controller comprises interface circuitry, a processor and a memory, the memory containing instructions executable by the processor whereby the controller is operative to transmit the at least one control signal to the optical modulators.

In an embodiment, the controller is operative to transmit a first control signal and to transmit a second control signal. The first control signal is configured to cause the optical modulator to be configured in the pulsed operating mode. The second control signal is configured to cause the optical modulator to be configured in the cw operating mode. The controller is operative to switch between transmitting the first control signal and the second control signal according to a pre-set switching pattern stored in the memory.

In an embodiment, the controller is further operative to transmit the at least one control signal in response to receiving an external trigger signal.

In an embodiment, the controller is further operative to transmit at least one modulation timing control signal configured to cause the optical modulator to synchronously apply amplitude modulation.

In an embodiment, the phase control apparatus comprises a wavefront sensor and a further controller. The wavefront sensor is configured to detect wavefront deformation of a said combined laser signal caused by phase differences between seed laser signals within the combined laser signal. The wavefront sensor is configured to output an error signal indicative of a detected wavefront deformation. The further controller is operative to transmit phase control signals responsive to the error signal. The phase control signals are configured to cause phase actuators to adjust phases of seed laser signals to minimize the error signal.

In an embodiment, the further controller comprises interface circuitry, a processor and a memory. The memory contains instructions executable by the processor whereby the further controller is operative to receive the error signals and to transmit phase control signals responsive to the error signal.

### Brief Description of the drawings

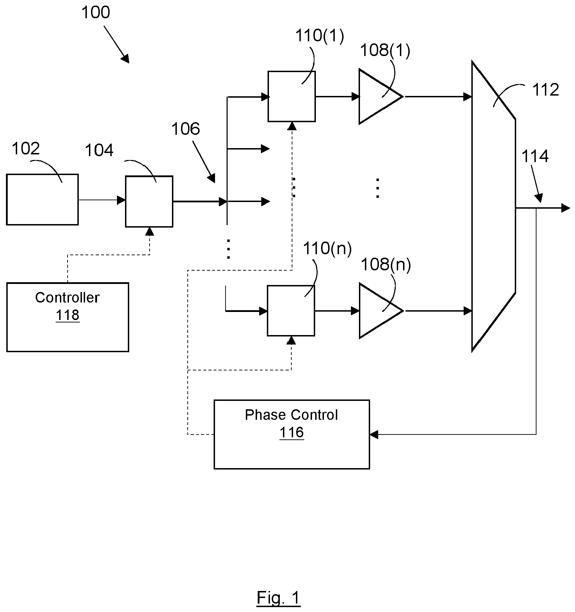

Figures 1 to 6 are block diagrams illustrating embodiments of high energy laser processing systems.

### Detailed description

Referring to Figure 1, an embodiment provides a high energy laser processing system 100 comprising an optical source 102, an optical modulator 104, an optical splitter 106, a plurality of optical amplifiers 108, a plurality of phase actuators 110, an optical beam combiner 112, phase control apparatus 116, and a controller 118.

The optical source 102 is configured to provide a continuous wave, cw, initial laser signal having a spectral linewidth in the range 15 to 250 GHz.

The optical modulator 104 is configurable to transmit laser signals without applying amplitude modulation or to apply amplitude modulation to laser signals. The optical modulator has a cw operating mode and a pulsed operating mode. In the cw operating mode, the optical modulator is configured to transmit the cw initial laser signal. In the pulsed operating mode, the optical modulator is configured to apply amplitude modulation to output a pulsed initial laser signal of initial laser pulses.

The optical splitter 106 is configured to power split the initial laser signal into a plurality of seed laser signals.

The optical amplifiers 108(1) to 108(n) are configured to receive the seed laser signals from the optical splitter. A single optical amplifier is illustrated for receiving and amplifying each seed laser signal but it will be understood by the skilled person that a series of optical amplifiers may alternatively be used for each seed laser signal. Each optical amplifier 108, or series of optical amplifiers, is configured to amplify the respective seed laser signal to an average optical power in the range 800 W to 5 kW. Each optical amplifier 108 may, for example, be an optical fibre amplifier or may be a solid state amplifier.

The phase actuators 110(1) to 110(n) are configurable to adjust phases of seed laser signals. The phase actuators are provided between the optical splitter 106 and respective optical amplifiers 108(1) to 108(n).

The optical beam combiner 112 is configured to receive the amplified seed laser signals output from the optical amplifiers. The optical beam combiner is configured to combine cw seed laser signals into a cw combined laser signal and to combine pulsed seed laser signals into a pulsed combined laser signal.

An optical tap 114 is provided after the optical beam combiner and is configured to tap off a portion of the combined laser signal output from the optical combiner, to form a monitoring signal. The monitoring signal is routed to the phase control apparatus 116. The phase control apparatus 116 is configured to, based on the monitoring signal, determine phase differences between seed laser signals within the combined laser signal output from the optical beam combiner.

The phase control apparatus is operative to transmit phase control signals to phase actuators 110. The phase control signals are configured to cause phase actuators to adjust phases of seed laser signals to minimize phase differences between seed laser signals within the combined laser signal output from the optical combiner.

The phase actuators 110, optical beam combiner 112, optical tap 114 and phase control apparatus 116 form coherent beam combining apparatus. Coherent beam combining is a technique that will be well know to the skilled person, as described, for example in Fathi, H., Närhi, M. and Gumenyuk, R., "Towards Ultimate High-Power Scaling: Coherent Beam Combining of Fiber Lasers", Photonics, 2021, 8, 566.

The controller 118 is operative to transmit at least one control signal configured to cause the optical modulator to switch between operating in the pulsed operating mode and operating in the cw operating mode.

In an embodiment, the optical source 102 comprises a grating-based laser oscillator configured to generate a cw seed laser signal having a spectral linewidth of up to 120 GHz.

In a further embodiment, the optical source 102 comprises a laser diode configured to generate a cw seed laser signal having a spectral linewidth in the range 15 to 250 GHz, equivalent to a full width half maximum, FWHM, linewidth of approximately 50 pm to 1 nm at a seed laser wavelength in the range 1030 nm to 1090 nm.

The laser diode may be a fibre Bragg grating locked laser diode or a Fabry-Perot laser diode.

In an embodiment, the seed laser pulses are nanosecond pulses.

In an embodiment, the seed laser pulses have a pulse duration in the range 1 ns to 2000 ns.

In an embodiment, the seed laser pulses have a pulse repetition rate in the range 1 MHz to 100 MHz.

In an embodiment, the optical modulator 104 is a semiconductor optical amplifier, SOA. The optical modulator 104 may alternatively be an acousto-optic modulator, AOM, an electroabsorption modulator, EAM, a booster optical amplifier, BOA, or an optical switch, such as a micro-electromechanical switch.

In an embodiment, the cw combined laser signal has an average optical power of at least 10 kW, such as up to 100 kW.

In an embodiment, the optical modulator 104 and the optical amplifiers 108 are configured to provide seed laser pulses having a peak pulse energy in the range 0.5 mJ and 10 mJ.

In an embodiment, the pulsed combined laser signal has a peak pulse energy of at least 20 mJ, such as up to 100 mJ.

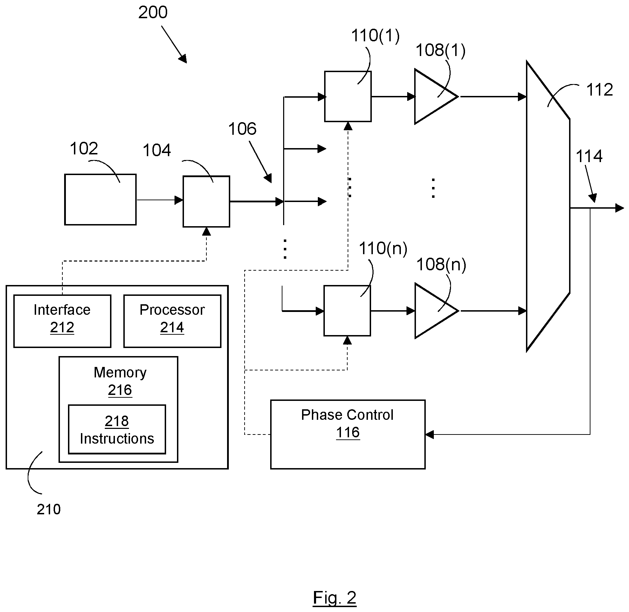

Referring to Figure 2, an embodiment provides a high energy laser processing system 200 comprising an optical source 102, an optical modulator 104, an optical splitter 106, a plurality of optical amplifiers 108, a plurality of phase actuators 110, an optical beam combiner 112, phase control apparatus 116, and a controller 210.

The controller 210 comprises interface circuitry 212, a processor 214 and a memory 216. The memory contains instructions 218 executable by the processor whereby the controller is operative to transmit the at least one control signal to the optical modulator 104.

In an embodiment, the controller 210 is operative to transmit a first control signal and to transmit a second control signal. The first control signal is configured to cause the optical modulator 104 to be configured in the pulsed operating mode. The second control signal is configured to cause the optical modulator to be configured in the cw operating mode. The controller is operative to switch between transmitting the first control signal and the second control signal according to a pre-set switching pattern stored in the memory.

In an embodiment, the controller 210 is further operative to transmit the first control signal and/or the second control signal in response to receiving an external trigger signal.

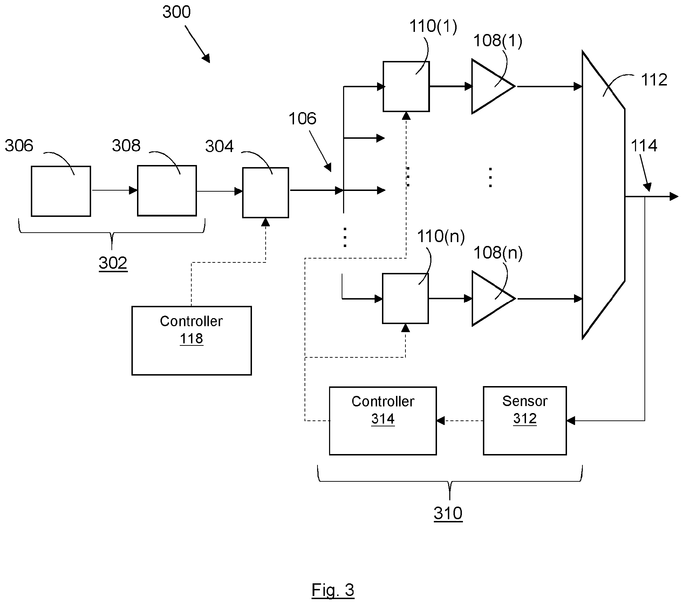

Referring to Figure 3, an embodiment provides a high energy laser processing system 300 comprising an optical source 302, an optical modulator 304, an optical splitter 106, a plurality of optical amplifiers 108, a plurality of phase actuators 110, an optical beam combiner 112, phase control apparatus 310, and a controller 118.

The optical source 302 comprises a single frequency laser 306 and a phase modulator 308. The single frequency laser 306 is configured to generate a single frequency cw laser signal having a spectral linewidth of up to 20kHz. The phase modulator 308 is operative to apply phase modulation to the single frequency cw laser signal to increase the spectral linewidth to up to 120 GHz to form a cw initial laser signal. The optical modulator 304 is provided after the phase modulator. The optical modulator is configured, in the cw operating mode, to transmit the cw initial laser signal without applying amplitude modulation. The optical modulator is configured, in the pulsed operating mode, to apply amplitude modulation to the cw initial laser signal received from the phase modulator to form a pulsed initial laser signal.

The phase control apparatus 310 comprises a wavefront sensor 312 and a further controller 314. An optical tap 114 is provided after the optical beam combiner and is configured to tap off a portion of the combined laser signal output from the optical combiner, to form a monitoring signal. The monitoring signal is routed to the wavefront sensor. The wavefront sensor is configured to detect wavefront deformation of the monitoring signal, and thus of the combined laser signal, caused by phase differences between seed laser signals within the combined laser signal. The wavefront sensor 312 is configured to measure aberrations ("wavefront errors") in the optical wavefront of the monitoring signal. The wavefront sensor is configured to output an error signal indicative of a measured aberration, i.e. of a detected wavefront deformation.

The controller 314 is operative to transmit phase control signals responsive to the error signal. The phase control signals are configured to cause phase actuators to adjust phases of seed laser signals to minimize the error signal, i.e. to minimize wavefront deformation of the monitoring signal, and thus of the combined laser signal, caused by phase differences between seed laser signals within the combined laser signal.

The phase actuators 110, optical beam combiner 112, optical tap 114, wavefront sensor 312 and controller 314 form coherent beam combining apparatus. Coherent beam combining is a technique that will be well know to the skilled person, as described, for example in Fathi, H., Närhi, M. and Gumenyuk, R., "Towards Ultimate High-Power Scaling: Coherent Beam Combining of Fiber Lasers", Photonics, 2021, 8, 566.

For coherent beam combining, the optical path lengths from the optical splitter 106 to the optical combiner 112 need to be well within the coherence length of the single frequency laser 306. Optical path lengths may be matched to within microns using a combination of delay lines and piezo translated mirrors within the optical path, for example between the optical amplifiers 108 and the optical combiner 112.

In an embodiment, the controller 314 is additionally configured to determine phase delays to be applied by phase actuators to cause phase front matching of the respective seed laser signals, to minimize the wavefront error measured by the wavefront sensor 312, to ensure coherent combining of the respective seed laser signals.

In an embodiment, the controller 314 is configured to determine phase delays to be applied by phase actuators to cause phase front matching of the respective seed laser signals, to minimize the wavefront error, by applying a 'hill climbing' algorithm.

It will be understood that a controller 210 as described above may alternatively be used for either or both the controller 118 and the further controller 314.

In an embodiment, the single frequency cw laser signal has a spectral linewidth of up to 10 kHz.

In an example, the single frequency laser 306 is a Ytterbium-doped fibre laser having an operating range of 1030-1120 nm, a spectral linewidth of up to 10 kHz, and at least 10 mW optical power. The Ytterbium-doped fibre laser may for example be a NKT Photonics ^{®} Koheras BASIK Y10 Ytterbium fibre laser having a wavelength of 1064 nm, at least 10 mW output power and a spectral linewidth (full width half maximum, FWHM) of 10 kHz.

In an embodiment, the single frequency cw laser signal has a spectral linewidth of up to 1 kHz.

In an embodiment, the single frequency cw laser signal has a spectral linewidth of up to 500 Hz.

In an embodiment, the single frequency laser 306 is a fibre laser.

In an example, the single frequency laser 306 is an Erbium-doped fibre laser having an operating range of 1535-1580 nm, a spectral linewidth as low as 200 Hz, and 30-40 mW optical power. The Erbium-doped fibre laser may for example be a NKT Photonics ^{®} Koheras BASIK E15 Erbium fibre laser having a wavelength of 1550.12 nm, 40 mW output power and a spectral linewidth (full width half maximum, FWHM) of 200 Hz.

In an embodiment, the optical modulator 304 is a semiconductor optical amplifier, SOA.

In an embodiment, the SOA 304 is additionally configured, in the cw operating mode, to amplify the cw initial laser signal.

In an embodiment, the SOA 304 is configured to amplify the cw initial laser signal to an optical power of up to 1 W.

The SOA 304 may be configured to amplify the cw initial laser signal to an optical power of up to 500 mW. The SOA 304 may be configured to amplify the cw initial laser signal to an optical power of up to 300 mW. The SOA 304 may be configured to amplify the cw initial laser signal to an optical power of up to 200 mW. The SOA 304 may be configured to amplify the cw initial laser signal to an optical power of up to 100 mW.

In an embodiment, the SOA 304 is additionally configured, in the pulsed operating mode, to amplify at the same time as applying amplitude modulation to the cw initial laser signal received from the phase modulator to form a pulsed initial laser signal, thereby amplifying the initial laser pulses.

In an embodiment, the SOA 304 is configured, in the pulsed operating mode, to amplify the cw initial laser signal received from the phase modulator so that the initial laser pulses are amplified to an average optical power in the range 1 mW to 250 mW.

In a further embodiment, the optical modulator 304 is an AOM, or an EAM, or a BOA, or an optical switch, such as a micro-electromechanical switch.

In an embodiment, the initial laser pulses are nanosecond pulses.

In an embodiment, the initial laser pulses have a pulse duration in the range 1 ns to 2000 ns.

In an embodiment, the initial laser pulses have a pulse repetition rate in the range 1 MHz to 100 MHz.

In an embodiment, the cw combined laser signal has an average optical power of at least 10 kW, such as up to 100 kW.

To achieve an average optical power of 10 kW, the high energy laser processing system 300 may, for example, be configured with a 1:5 optical splitter 106, 5 phase actuators 110(1) to 110(5) and 5 optical amplifiers (or series of optical amplifiers) 108(1) to 108(5). With the SOA 304 and the optical amplifiers 108 configured to output seed laser signals having an average optical power of 2 kW.

Alternatively, to achieve an average optical power of 10 kW, the high energy laser processing system 300 may be configured with a 1:10 optical splitter 106, 10 phase actuators 110(1) to 110(10) and 10 optical amplifiers (or series of optical amplifiers) 108(1) to 108(10). With the SOA 304 and the optical amplifiers 108 configured to output seed laser signals having an average optical power of 1 kW. It will be appreciated that other additive combinations of average optical power, optical splitter configuration and number of phase actuators and optical amplifiers may alternatively be used to achieve a combined laser signal having an average signal power of 10 kW.

In an embodiment, the combined laser signal has an average optical power of up to 100 kW. To achieve an average optical power of 100 kW, the high energy laser processing system 300 may, for example, be configured with a 1:20 optical splitter 106, 20 phase actuators 110(1) to 110(20) and 20 optical amplifiers (or series of optical amplifiers) 108(1) to 108(20). With the SOA 304 and the optical amplifiers 108 configured to output seed laser signals having an average optical power of 5 kW. It will be appreciated that other additive combinations of average optical power, optical splitter configuration and number of phase actuators and optical amplifiers may alternatively be used to achieve a combined laser signal having an average signal power of up to 100 kW.

In an embodiment, the optical beam combiner 112 is a geometric beam combiner, such as a tiled aperture beam combiner, for example a tiled array of end capped optical fibres, or a filled aperture beam combiner, for example a diffraction grating.

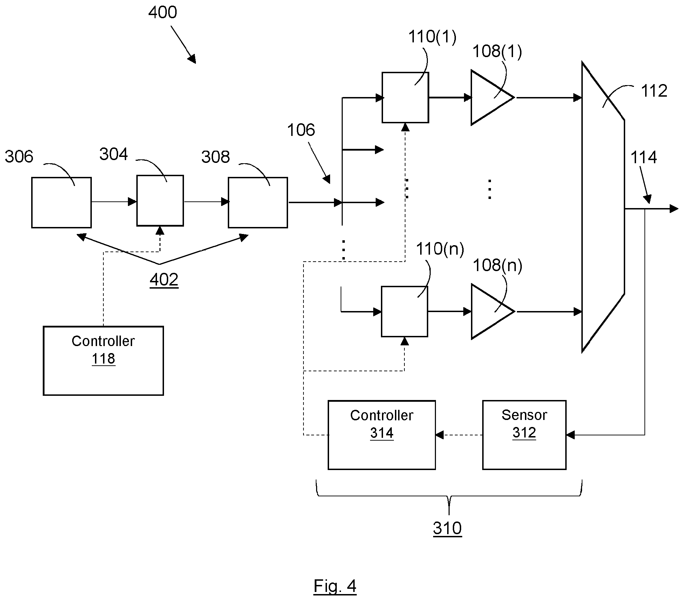

Referring to Figure 4, an embodiment provides a high energy laser processing system 400 comprising an optical source 402, an optical modulator 304, an optical splitter 106, a plurality of optical amplifiers 108, a plurality of phase actuators 110, an optical beam combiner 112, phase control apparatus 310, and a controller 118.

The optical source 402 comprises a single frequency laser 306 and a phase modulator 308. The single frequency laser 306 is configured to generate a single frequency cw laser signal having a spectral linewidth of up to 20kHz. The optical modulator 304 is provided between the single frequency laser 306 and the phase modulator 308. The optical modulator is configured, in the cw operating mode, to transmit the single frequency cw laser signal without applying amplitude modulation. The phase modulator 308 is operative to apply phase modulation to increase the spectral linewidth of the single frequency cw laser signal to up to 120 GHz to form a cw initial laser signal. The optical modulator is configured, in the pulsed operating mode, to apply amplitude modulation to the single frequency cw laser signal to form a single frequency pulsed laser signal. The phase modulator 308 is further operative to apply phase modulation to the single frequency pulsed laser signal to increase the spectral linewidth to up to 120 GHz to form a pulsed initial laser signal.

The remaining elements of the high energy laser processing system 400 are the same as those of the system 300 described above with reference to Figure 3.

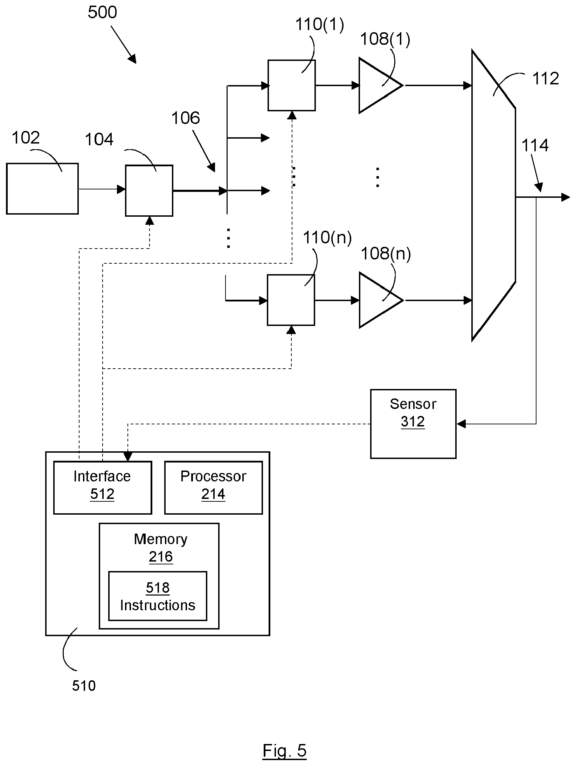

Referring to Figure 5, an embodiment provides a high energy laser processing system 500 comprising an optical source 102, an optical modulator 104, an optical splitter 106, a plurality of optical amplifiers 108, a plurality of phase actuators 110, an optical beam combiner 112, a wavefront sensor 312, and a controller 510.

The system 500 of this embodiment is substantially the same as the system 200 described above with reference to Figure 2, with the following modifications to the phase control apparatus and the controller 510.

The controller 510 comprises interface circuitry 512, a processor 214 and a memory 216. The memory contains instructions 518 executable by the processor whereby the controller is operative to transmit the at least one control signal to the optical modulator 104 and the controller is operative to transmit phase control signals to phase actuators 110.

The controller 510 is operative to transmit a first control signal to the optical modulator and to transmit a second control signal to the optical modulator. The first control signal is configured to cause the optical modulator 104 to be configured in the pulsed operating mode. The second control signal is configured to cause the optical modulator to be configured in the cw operating mode. The controller is operative to switch between transmitting the first control signal and the second control signal according to a pre-set switching pattern stored in the memory.

In this embodiment, the phase control apparatus comprises the wavefront sensor 312 and the functionality of the controller 510 in relation to the phase actuators 110, as described in more detail below. The optical tap 114 is configured to tap off a portion of the combined laser signal output from the optical combiner, to form a monitoring signal. The monitoring signal is routed to the wavefront sensor 312. The wavefront sensor is configured to detect wavefront deformation of the monitoring signal, and thus of the combined laser signal, caused by phase differences between seed laser signals within the combined laser signal. The wavefront sensor 312 is configured to measure aberrations ("wavefront errors") in the optical wavefront of the monitoring signal. The wavefront sensor is configured to output an error signal indicative of a measured aberration, i.e. of a detected wavefront deformation.

The controller 510 is operative to transmit phase control signals responsive to the error signal. The phase control signals are configured to cause phase actuators to adjust phases of seed laser signals to minimize the error signal, i.e. to minimize wavefront deformation of the monitoring signal, and thus of the combined laser signal, caused by phase differences between seed laser signals within the combined laser signal.

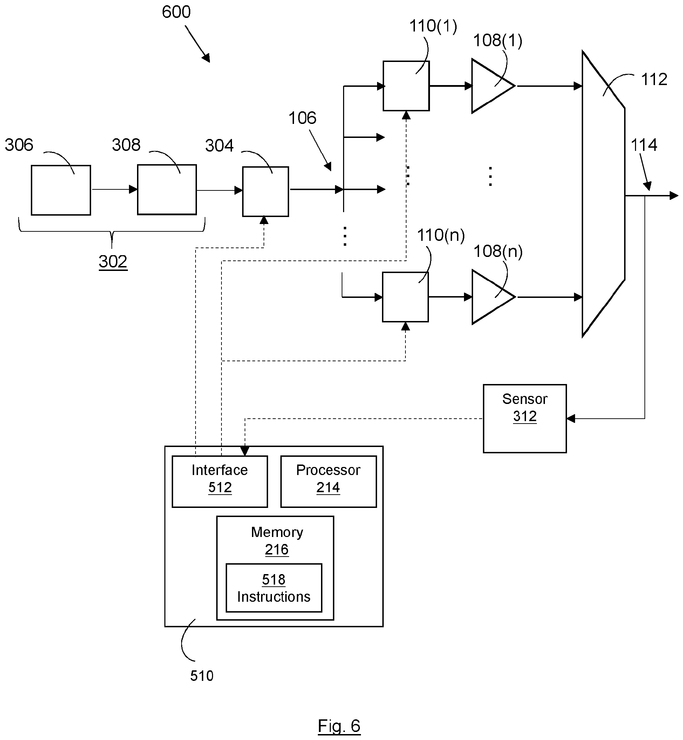

Referring to Figure 6, an embodiment provides a high energy laser processing system 600 comprising an optical source 302, an optical modulator 304, an optical splitter 106, a plurality of optical amplifiers 108, a plurality of phase actuators 110, an optical beam combiner 112, a wavefront sensor 312, and a controller 510.

The system 600 of this embodiment is substantially the same as the system 300 described above with reference to Figure 3, with the following modifications.

The controller 510 comprises interface circuitry 512, a processor 214 and a memory 216. The memory contains instructions 518 executable by the processor whereby the controller is operative to transmit the at least one control signal to the optical modulator 304 and the controller is operative to transmit phase control signals to phase actuators 110. The controller 510 thus performs the operations of both the controller 118 and the further controller 314 of Figure 3.

The controller 510 is operative to transmit a first control signal to the optical modulator 304 and to transmit a second control signal to the optical modulator. The first control signal is configured to cause the optical modulator 304 to be configured in the pulsed operating mode. The second control signal is configured to cause the optical modulator to be configured in the cw operating mode. The controller is operative to switch between transmitting the first control signal and the second control signal according to a pre-set switching pattern stored in the memory.

In this embodiment, the phase control apparatus comprises the wavefront sensor 312 and the functionality of the controller 510 in relation to the phase actuators 110, as described in more detail below. The optical tap 114 is configured to tap off a portion of the combined laser signal output from the optical combiner, to form a monitoring signal. The monitoring signal is routed to the wavefront sensor 312. The wavefront sensor is configured to detect wavefront deformation of the monitoring signal, and thus of the combined laser signal, caused by phase differences between seed laser signals within the combined laser signal. The wavefront sensor 312 is configured to measure aberrations ("wavefront errors") in the optical wavefront of the monitoring signal. The wavefront sensor is configured to output an error signal indicative of a measured aberration, i.e. of a detected wavefront deformation.

The controller 510 is operative to transmit phase control signals responsive to the error signal. The phase control signals are configured to cause phase actuators to adjust phases of seed laser signals to minimize the error signal, i.e. to minimize wavefront deformation of the monitoring signal, and thus of the combined laser signal, caused by phase differences between seed laser signals within the combined laser signal.

### Additional Embodiments

1. A high energy laser processing system (100, 200, 300) comprising:
   an optical source (102, 302, 402) configured to provide a continuous wave, cw, initial laser signal having a spectral linewidth in the range 15 to 250 GHz;
   an optical modulator (104, 304) configurable to transmit laser signals without applying amplitude modulation or to apply amplitude modulation to laser signals, the optical modulator having a cw operating mode in which it is configured to transmit the cw initial laser signal without applying amplitude modulation and having a pulsed operating mode in which it is configured to apply amplitude modulation to output a pulsed initial laser signal of initial laser pulses;
   an optical splitter (106) configured to power split the initial laser signal into a plurality of seed laser signals;
   a plurality of optical amplifiers (108) configured to amplify the seed laser signals to average optical powers in the range 800 Wto 5 kW;
   a plurality of phase actuators (110) configurable to adjust phases of seed laser signals, the phase actuators provided between the optical splitter and respective optical amplifiers;
   an optical beam combiner (112) configured to receive seed laser signals from the optical amplifiers and configured to combine cw seed laser signals into a cw combined laser signal and to combine pulsed seed laser signals into a pulsed combined laser signal;
   phase control apparatus (116, 310) configured to determine phase differences between seed laser signals within a said combined laser signal and operative to transmit phase control signals to phase actuators, the phase control signals configured to cause phase actuators to adjust phases of seed laser signals to minimize phase differences between seed laser signals within a said combined laser signal; and
   a controller (118, 210, 318, 510) operative to transmit at least one control signal configured to cause the optical modulator to switch between operating in the pulsed operating mode and operating in the cw operating mode.
2. The system of embodiment 1, wherein the cw combined laser signal has an average optical power of at least 10 kW, such as up to 100 kW.
3. The system of embodiment 1 or embodiment 2, wherein the optical modulator (104, 304) and the optical amplifiers (108) are configured to provide seed laser pulses having a peak pulse energy in the range 0.5 mJ and 10 mJ.
4. The system of embodiment 3, wherein the pulsed combined laser signal has a peak pulse energy of at least 20 mJ, such as up to 100 mJ.
5. The system of any one of embodiments 1 to 4, wherein the optical source comprises a single frequency laser (306) and a phase modulator (308), wherein the single frequency laser is configured to generate a single frequency cw laser signal having a spectral linewidth of up to 20kHz and the phase modulator is operative to apply phase modulation to increase the spectral linewidth to up to 120 GHz.
6. The system of embodiment 5, wherein the phase modulator (308) is operative to apply phase modulation to the single frequency cw laser signal to increase the spectral linewidth to up to 120 GHz to form a cw initial laser signal and wherein the optical modulator is provided after the phase modulator and the optical modulator (304) is configured, in the cw operating mode, to transmit the cw initial laser signal without applying amplitude modulation and the optical modulator is configured, in the pulsed operating mode, to apply amplitude modulation to the cw initial laser signal received from the phase modulator to form a pulsed initial laser signal.
7. The system of embodiment 5, wherein the optical modulator (304) is provided between the single frequency laser (306) and the phase modulator (308), and wherein the optical modulator is configured, in the cw operating mode, to transmit the single frequency cw laser signal without applying amplitude modulation and the optical modulator is configured, in the pulsed operating mode, to apply amplitude modulation to the single frequency cw laser signal to form a single frequency pulsed laser signal and the phase modulator is operative to apply phase modulation to increase the spectral linewidth of the single frequency cw laser signal to up to 120 GHz to form a cw initial laser signal and the phase modulator is further operative to apply phase modulation to increase the spectral linewidth of the single frequency pulsed laser signal to up to 120 GHz to form a pulsed initial laser signal.
8. The system of any one of embodiment 5 to 7, wherein the single frequency cw laser signal has a spectral linewidth of up to 10 kHz, such as up to 1 kHz, such as up to 500 Hz.
9. The system of any one of embodiments 1 to 4, wherein the optical source (102) comprises one of: a grating-based fibre laser oscillator configured to generate a cw initial laser signal having a spectral linewidth of up to 120 GHz; or a laser diode configured to generate a cw initial laser signal having a spectral linewidth in the range 15 to 250 GHz.
10. The system of embodiment 10, wherein the laser diode is one of a fibre Bragg grating locked laser diode or a Fabry-Perot laser diode.
11. The system of any one of embodiments 1 to 11, wherein the initial laser pulses are nanosecond pulses.
12. The system of embodiment 12, wherein the initial laser pulses have a pulse duration in the range 1 ns to 2000 ns.
13. The system of embodiment 13, wherein the initial laser pulses have a pulse repetition rate in the range 1 MHz to 100 MHz.
14. The system of any one of embodiments 1 to 14, wherein the optical modulator (304) is a semiconductor optical amplifier.
15. The system of embodiment 15, wherein the semiconductor optical amplifier is additionally configured, in the cw operating mode, to amplify the cw initial laser signal to an optical power of up to 1 W, such as up to 500 mW, such as up to 300 mW, such as up to 200 mW, such as up to 100 mW.
16. The system of any one of embodiments 15 to 17, wherein the semiconductor optical amplifier is additionally configured, in the pulsed operating mode, to amplify the initial laser pulses to an average optical power in the range 1 mW to 250 mW.
17. The system of any one of embodiments 1 to 14, wherein the optical modulator (104) is one of an acousto-optic modulator, AOM, an electroabsorption modulator, EAM, a booster optical amplifier, BOA, or an optical switch, such as a micro-electromechanical switch.
18. The system of any one of the embodiments 1 to 17, wherein the optical beam combiner (112) is a geometric beam combiner.
19. The system of any one of embodiments 1 to 18, wherein the controller (210, 510) comprises interface circuitry (212, 512), a processor (214) and a memory (216), the memory containing instructions (218, 518) executable by the processor whereby the controller is operative to transmit the at least one control signal to the optical modulator.
20. The system of embodiment 19, wherein the controller (210, 510) is operative to transmit a first control signal configured to cause the optical modulator to be configured in the pulsed operating mode and to transmit a second control signal configured to cause the optical modulator to be configured in the cw operating mode, and wherein the controller is operative to switch between transmitting the first control signal and the second control signal according to a pre-set switching pattern stored in the memory.
21. The system of embodiment 19, wherein the controller (210) is further operative to transmit the at least one control signal in response to receiving an external trigger signal.
22. The system of any one of the preceding claims, wherein the phase control apparatus (310) comprises:
   a wavefront sensor (312) configured to detect wavefront deformation of a said combined laser signal caused by phase differences between seed laser signals within the combined laser signal and to output an error signal indicative of a detected wavefront deformation; and
   a further controller (314) operative to transmit phase control signals responsive to the error signal, the phase control signals configured to cause phase actuators to adjust phases of seed laser signals to minimize the error signal.
23. The system of claim 22, wherein the further controller (510) comprises interface circuitry (512), a processor (514) and a memory (516), the memory containing instructions (518) executable by the processor whereby the further controller is operative to receive the error signals and to transmit phase control signals responsive to the error signal.

## Claims

1. A high energy laser processing system (100, 200, 300) comprising:
an optical source (102, 302, 402) configured to provide a continuous wave, cw, initial laser signal having a spectral linewidth in the range 15 to 250 GHz;
an optical modulator (104, 304) configurable to transmit laser signals without applying amplitude modulation or to apply amplitude modulation to laser signals, the optical modulator having a cw operating mode in which it is configured to transmit the cw initial laser signal without applying amplitude modulation and having a pulsed operating mode in which it is configured to apply amplitude modulation to output a pulsed initial laser signal of initial laser pulses;
an optical splitter (106) configured to power split the initial laser signal into a plurality of seed laser signals;
a plurality of optical amplifiers (108) configured to amplify the seed laser signals to average optical powers in the range 800 Wto 5 kW;
a plurality of phase actuators (110) configurable to adjust phases of seed laser signals, the phase actuators provided between the optical splitter and respective optical amplifiers;
an optical beam combiner (112) configured to receive seed laser signals from the optical amplifiers and configured to combine cw seed laser signals into a cw combined laser signal and to combine pulsed seed laser signals into a pulsed combined laser signal;
phase control apparatus (116, 310) configured to determine phase differences between seed laser signals within a said combined laser signal and operative to transmit phase control signals to phase actuators, the phase control signals configured to cause phase actuators to adjust phases of seed laser signals to minimize phase differences between seed laser signals within a said combined laser signal; and
a controller (118, 210, 318, 510) operative to transmit at least one control signal configured to cause the optical modulator to switch between operating in the pulsed operating mode and operating in the cw operating mode.

2. The system of claim 1, wherein the cw combined laser signal has an average optical power of at least 10 kW, such as up to 100 kW.

3. The system of claim 1 or claim 2, wherein the optical modulator (104, 304) and the optical amplifiers (108) are configured to provide seed laser pulses having a peak pulse energy in the range 0.5 mJ and 10 mJ.

4. The system of claim 3, wherein the pulsed combined laser signal has a peak pulse energy of at least 20 mJ, such as up to 100 mJ.

5. The system of any one of claims 1 to 4, wherein the optical source comprises a single frequency laser (306) and a phase modulator (308), wherein the single frequency laser is configured to generate a single frequency cw laser signal having a spectral linewidth of up to 20kHz and the phase modulator is operative to apply phase modulation to increase the spectral linewidth to up to 120 GHz.

6. The system of claim 5, wherein the phase modulator (308) is operative to apply phase modulation to the single frequency cw laser signal to increase the spectral linewidth to up to 120 GHz to form a cw initial laser signal and wherein the optical modulator is provided after the phase modulator and the optical modulator (304) is configured, in the cw operating mode, to transmit the cw initial laser signal without applying amplitude modulation and the optical modulator is configured, in the pulsed operating mode, to apply amplitude modulation to the cw initial laser signal received from the phase modulator to form a pulsed initial laser signal.

7. The system of claim 5, wherein the optical modulator (304) is provided between the single frequency laser (306) and the phase modulator (308), and wherein the optical modulator is configured, in the cw operating mode, to transmit the single frequency cw laser signal without applying amplitude modulation and the optical modulator is configured, in the pulsed operating mode, to apply amplitude modulation to the single frequency cw laser signal to form a single frequency pulsed laser signal and the phase modulator is operative to apply phase modulation to increase the spectral linewidth of the single frequency cw laser signal to up to 120 GHz to form a cw initial laser signal and the phase modulator is further operative to apply phase modulation to increase the spectral linewidth of the single frequency pulsed laser signal to up to 120 GHz to form a pulsed initial laser signal.

8. The system of any one of claims 5 to 7, wherein the single frequency cw laser signal has a spectral linewidth of up to 10 kHz, such as up to 1 kHz, such as up to 500 Hz.

9. The system of any one of claims 1 to 4, wherein the optical source (102) comprises one of: a grating-based fibre laser oscillator configured to generate a cw initial laser signal having a spectral linewidth of up to 120 GHz; or a laser diode configured to generate a cw initial laser signal having a spectral linewidth in the range 15 to 250 GHz.

10. The system of any one of claims 1 to 9, wherein the optical modulator (304) is a semiconductor optical amplifier.

11. The system of claim 10, wherein the semiconductor optical amplifier is additionally configured, in the cw operating mode, to amplify the cw initial laser signal to an optical power of up to 1 W, such as up to 500 mW, such as up to 300 mW, such as up to 200 mW, such as up to 100 mW.

12. The system of any one of claims 10 to 11, wherein the semiconductor optical amplifier is additionally configured, in the pulsed operating mode, to amplify the initial laser pulses to an average optical power in the range 1 mW to 250 mW.

13. The system of any one of claims 1 to 9, wherein the optical modulator (104) is one of an acousto-optic modulator, AOM, an electroabsorption modulator, EAM, a booster optical amplifier, BOA, or an optical switch, such as a micro-electromechanical switch.

14. The system of any one of the preceding claims, wherein the controller (210, 510) comprises interface circuitry (212, 512), a processor (214) and a memory (216), the memory containing instructions (218, 518) executable by the processor whereby the controller (210, 510) is operative to transmit a first control signal configured to cause the optical modulator to be configured in the pulsed operating mode and to transmit a second control signal configured to cause the optical modulator to be configured in the cw operating mode, and wherein the controller is operative to switch between transmitting the first control signal and the second control signal according to a pre-set switching pattern stored in the memory.

15. The system of any one of the preceding claims, wherein the phase control apparatus (310) comprises:
a wavefront sensor (312) configured to detect wavefront deformation of a said combined laser signal caused by phase differences between seed laser signals within the combined laser signal and to output an error signal indicative of a detected wavefront deformation; and
a further controller (314) operative to transmit phase control signals responsive to the error signal, the phase control signals configured to cause phase actuators to adjust phases of seed laser signals to minimize the error signal.
